# EUROPEAN PATENT SPECIFICATION

(11) **EP 3 035 582 B1**
(45) Date of publication and mention of the grant of the patent: **23.08.2017**
(21) Application number: 15199947.1
(22) Date of filing: 14.12.2015
(51) Int. Cl.: H04L 9/00, G06F 21/72

(54) **BINDING WHITE-BOX IMPLEMENTATION TO REDUCED SECURE ELEMENT**
BINDUNG EINER WHITE-BOX-IMPLEMENTIERUNG MIT EINEM REDUZIERTEN SICHEREM ELEMENT
LIAISON D'UNE IMPLÉMENTATION DE BOÎTE BLANCHE À UN ÉLÉMENT SÉCURISÉ RÉDUIT

(30) Priority: 19.12.2014 US 201414577148
(43) Date of publication of application: 22.06.2016
(73) Proprietor: NXP B.V., 5656 AG Eindhoven (NL)
(72) Inventor: Michiels, Wil, 5656 AG Eindhoven (NL); Hoogerbrugge, Jan, 5656 AG Eindhoven (NL)
(74) Representative: Krott, Michel

(56) References cited:
- WO-A1-2010/102960
- WO-A1-2013/142979
- JAESUNG YOO ET AL: "A method for secure and efficient block cipher using white-box cryptography", PROCEEDINGS OF THE 6TH INTERNATIONAL CONFERENCE ON UBIQUITOUS INFORMATION MANAGEMENT AND COMMUNICATION, ICUIMC '12, 1 January 2012 (2012-01-01), page 1, XP055266878, New York, New York, USA DOI: 10.1145/2184751.2184856 ISBN: 978-1-4503-1172-4
- CHOW S ET AL: "Selected Areas in Cryptography, White-Box Cryptography and an AES Implementation", SELECTED AREAS IN CRYPTOGRAPHY : 9TH ANNUAL INTERNATIONAL WORKSHOP ; REVISED PAPERS / SAC 2002, ST. JOHN'S, NEWFOUNDLAND, CANADA, AUGUST 15 - 16, 2002; [LECTURE NOTES IN COMPUTER SCIENCE ; 2595], SPRINGER VERLAG, BERLIN (DE), vol. 2595, 15 August 2002 (2002-08-15), pages 250-270, XP002587883, ISBN: 978-3-540-00622-0

## Description

### TECHNICAL FIELD

Various exemplary embodiments disclosed herein relate generally to binding software components that perform a cryptographic function to a reduced secure element.

### BACKGROUND

The Internet provides users with convenient and ubiquitous access to digital content. Because the Internet is a powerful distribution channel, many user devices strive to directly access the Internet. The user devices may include a personal computer, laptop computer, set-top box, internet enabled media player, mobile telephone, smart phone, tablet, mobile hotspot, or any other device that is capable of accessing the Internet. The use of the Internet as a distribution medium for copyrighted content creates the compelling challenge to secure the interests of the content provider. Increasingly, user devices operate using a processor loaded with suitable software to render (playback) digital content, such as audio and/or video. Control of the playback software is one way to enforce the interests of the content owner including the terms and conditions under which the content may be used. Previously many user devices were closed systems. Today more and more platforms are partially open. Some users may be assumed to have complete control over and access to the hardware and software that provides access to the content and a large amount of time and resources to attack and bypass any content protection mechanisms. As a consequence, content providers must deliver content to legitimate users across a hostile network to a community where not all users or user devices can be trusted.

Secure software applications may be called upon to carry out various functions such as, for example, cryptographic functions used to protect and authenticate digital content. In order to counter attacks, these algorithms have to be obfuscated (hidden) in order to prevent reverse engineering and modification of the algorithm or prohibit obtaining the user-specific secure information. Accordingly, the functions of the secure software application may be carried out by various functions as defined by the instruction set of the processor implementing the secure software. For example, one way to obscure these functions is by the use of lookup tables.

Content providers must deliver content to legitimate users across a hostile network to a community where not all users or devices can be trusted. This has led to the development of white-box cryptography. In the white-box cryptography scenario it is assumed that the user has complete control of the hardware and software that provides access to the content, and an unlimited amount of time and resources to attack and bypass any content protection mechanisms. The secure software code that enforces the terms and conditions under which the content may be used should be tamper resistant. Digital rights management is a common application of secure software applications. The general approach in digital rights management for protected content distributed to user devices is to encrypt the digital content using for example, DES (Data Encryption Standard), AES (Advanced Encryption Standard), or using other known encryption schemes, and to use decryption keys to recover the digital content. These decryption keys must be protected to prevent unauthorized access to protected material.

In the digital right management scenario, the attacker has complete control of the software enforcing the management and access to the protected content. Accordingly, the attacker can modify software and also seek to obtain cryptographic keys used to encrypt the protected content. Such keys may be found by analyzing the software.

Regarding key distribution, a media player has to retrieve a decryption key from a license database in order to play back the media. The media player then has to store this decryption key somewhere in memory for the decryption of the encrypted content. This leaves an attacker two options for an attack on the key. First, an attacker may reverse engineer the license database access function allowing the attacker to retrieve asset keys from all license databases. In this situation the attacker does not need to understand the internal working of the cryptographic function. Second, the attacker may observe accesses of the memory during content decryption, thus the attacker may retrieve the decryption key. In both cases the key is considered to be compromised.

The widespread use of digital rights management (DRM) and other secure software has given rise to the need for secure, tamper-resistant software that seeks to complicate tampering with the software. Various techniques for increasing the tamper resistance of software applications exist. Most of these techniques are based on hiding the embedded knowledge of the application by adding a veil of randomness and complexity in both the control and the data path of the software application. The idea behind this is that it becomes more difficult to extract information merely by code inspection. It is therefore more difficult to find the code that, for example, handles access and permission control of the secure application, and consequently to change it.

As used herein, white-box cryptography includes a secure software application that performs cryptographic functions in an environment where an attacker has complete control of the system running the white-box cryptography software. Thus, the attacker can modify inputs and outputs, track the operations of the software, sample and monitor memory used by the software at any time, and even modify the software. Accordingly, the secure functions need to be carried out in a manner that prevents the disclosure of secret information used in the secure functionality. White-box cryptography functions may be implemented in various ways. Such methods include: obscuring the software code; using complex mathematical functions that obscure the use of the secret information; using look-up tables; using finite state machines; or any other methods that carry out cryptographic functions but hide the secret information needed for those secure functions. A white-box implementation may also contain components that include anti-debugging and tamper-proofing properties.

There are several reasons for preferring a software implementation of a cryptographic algorithm to a hardware implementation. This may, for instance, be the case because a software solution is renewable if the keys leak out, because it has lower cost, or because the application-developer has no influence on the hardware where the white-box system is implemented.

A table-based approach to a white-box implementation of the Advanced Encryption Standard (AES) and the Data Encryption Standard (DES) were proposed in the following papers: "White-Box Cryptography and an AES Implementation", by Stanley Chow, Philip Eisen, Harold Johnson, and Paul C. Van Oorschot, in Selected Areas in Cryptography: 9th Annual International Workshop, SAC 2002, St. John's, Newfoundland, Canada, Aug. 15-16, 2002, referred to hereinafter as "Chow 1"; and "A White-Box DES Implementation for DRM Applications", by Stanley Chow, Phil Eisen, Harold Johnson, and Paul C. van Oorschot, in Digital Rights Management: ACM CCS-9 Workshop, DRM 2002, Washington, D.C., USA, Nov. 18, 2002, referred to hereinafter as "Chow 2". Chow 1 and Chow 2 disclose methods of using a table-based approach to hide the cryptographic key by a combination of encoding its tables with random bijections, and extending the cryptographic boundary by pushing it out further into the containing application.

### SUMMARY

A brief summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various exemplary embodiments relate to a non-transitory machine-readable storage medium encoded with instructions for a keyed cryptographic operation having a first and second portion for execution by a cryptographic system mapping an input message to an output message, including: instructions for outputting first cryptographic data from a first portion the cryptographic operation to a secure hardware device implementing a secure function on the data; instructions for receiving output data from the secure hardware device; instructions for implementing an inverse of the secure function on the output data; and instructions for performing a second portion of the cryptographic operation on the inverted output data, wherein the instructions for implementing an inverse of the secure function on the output data are securely merged with the instructions for performing the second portion of the cryptographic operation on the inverted output data so that the inverted output is not accessible to an attacker.

Various embodiments are described further including a non-transitory machine-readable storage medium encoded with instructions for a keyed cryptographic operation having a first and second portion for execution by a cryptographic system mapping an input message to an output message, including: instructions for performing a first portion the cryptographic operation to produce cryptographic data; instructions for implementing an inverse of a secure function on a first portion of the cryptographic data; instructions for outputting inverted cryptographic data to a hardware device implementing a secure function on the data; instructions for receiving output data from the hardware device; and instructions for performing a second portion of the cryptographic operation on the hardware device output data, wherein the instructions for implementing an inverse of a secure function on a portion of the cryptographic data are securely merged with the instructions for implementing an inverse of a secure function on the cryptographic data so that the inverted output is not accessible to an attacker.

Various embodiments are described further including a non-transitory machine-readable storage medium encoded with instructions for a keyed cryptographic operation for execution by a cryptographic system mapping an input message having a first portion to an output message, including: instructions for receiving output data from a hardware device implementing a secure function on the first portion of the input message; instructions for implementing an inverse of the secure function on the output data; and instructions for performing the cryptographic operation on the inverted output data, wherein instructions for implementing an inverse of the secure function on the output data are securely merged with the instructions for performing the cryptographic operation on the inverted output data so that the inverted output is not accessible to an attacker.

Various embodiments are described further including a non-transitory machine-readable storage medium encoded with instructions for a keyed cryptographic operation for execution by a cryptographic system mapping an input message to an output message, including: instructions for performing the cryptographic operation to produce cryptographic data having a first portion; instructions for implementing an inverse of a secure function on the first portion of the cryptographic data; instructions for outputting inverted cryptographic data to a hardware device implementing the secure function, wherein the instructions for implementing an inverse of a secure function on the first portion of the cryptographic data are securely merged with the instructions for outputting inverted cryptographic data to a hardware device implementing the secure function so that the inverted output is not accessible to an attacker.

### BRIEF DESCRIPTION OF THE DRAWINGS

In order to better understand various exemplary embodiments, reference is made to the accompanying drawings, wherein:
FIG. 1 illustrates an embodiment of a cryptographic system using both software and a secure hardware element;
FIG. 2 illustrates a second embodiment of a cryptographic system using both software and a secure hardware element;
FIG. 3 illustrates a third embodiment of a cryptographic system using both software and a secure hardware element;
FIG. 4 illustrates a fourth embodiment of a cryptographic system using both software and a secure hardware element; and
FIG. 5 illustrates a system for providing a user device secure content and a software application that processes the secure content.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art, and are to be construed as being without limitation to such specifically recited examples and conditions. Additionally, the term, "or," as used herein, refers to a non-exclusive or (*i.e.,* and/or), unless otherwise indicated (*e.g*., "or else" or "or in the alternative"). Also, the various embodiments described herein are not necessarily mutually exclusive, as some embodiments can be combined with one or more other embodiments to form new embodiments.

There are several reasons for preferring a software implementation of a cryptographic algorithm to a hardware implementation. This may, for instance, be the case because a software solution is renewable if the keys leak out, because it is has lower cost, or because the application-developer has no influence on the hardware where the white-box system is implemented. As mentioned above a secure implementation of cryptographic algorithms may be implemented in a tamper-resistant hardware device, called a secure hardware element. This secure hardware element is then included in a device and when the device needs to execute a cryptographic algorithm it invokes the secure hardware element. The approach provides a very strong protection of the cryptographic keys. However, it is not very flexible and quite expensive. In response white-box software implementations have been proposed as an alternative to the hardware solution. However, it is much easier to copy the cryptographic functionality to another device. In the embodiments described herein, an approach is described that combines the benefits of the hardware and software solutions.

In combining the hardware and software approaches the following goals may be considered. First, define a secure hardware element for which the functionality is as easy to implement and low-cost as possible, but which includes the property of being difficult to copy. Second, bind a white-box implementation to an inverse of the functionality provided by this secure hardware element where the inverse may be a white-box implementation as well.

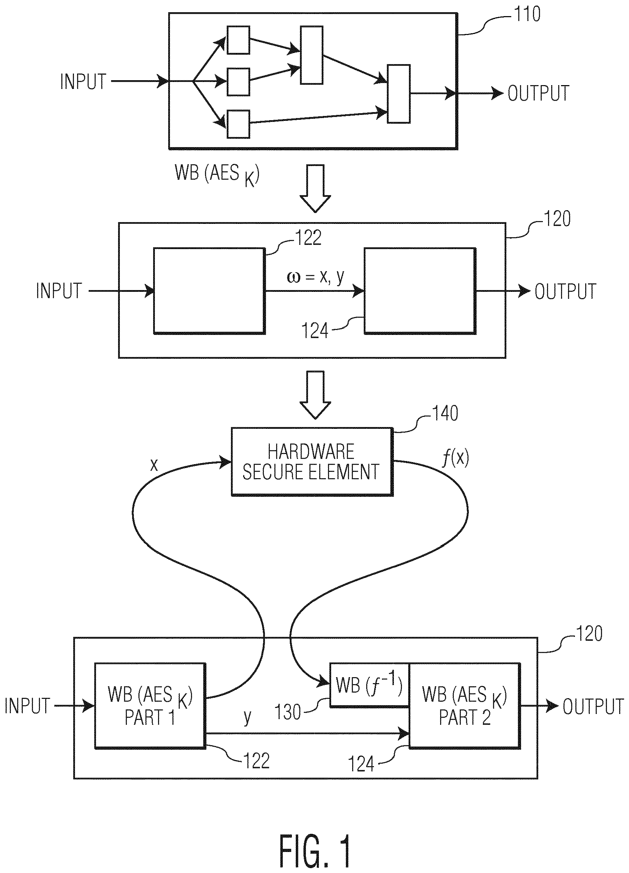

FIG. 1 illustrates an embodiment of a cryptographic system using both software and a secure hardware element. A white-box implementation 110 of a cryptographic function is shown at the top of FIG. 1. The white-box implementation may have an input and an output and may provide a white-box implementation of AES using a key K. The white-box implementation 110 may be implemented as described by Chow et al. Next, the white-box implementation 110 may be split into a white-box implementation 120 having a first portion 122 and a second portion 124. The first portion 122 produces an intermediate value ω that is input to the second portion 124. The intermediate value ω may have a first portion x and a second portion y. In the case of AES, ω may be the state of the cryptographic function at the split. The second portion 124 of the cryptographic function then operates on intermediate value ω (which includes x and y) to produce an output. The white-box implementation 120 may be split anywhere. Further, as will be shown below the so called split can be implemented at the input or the output of the cryptographic function. The intermediate value ω may have a size that is the same as the size of the state of the cryptographic operation. In other embodiments it may have a greater or smaller size relative to the state. If the size is smaller, the size of ω should be large enough to prove a large domain for the value of x making it harder to attack the overall cryptographic system including the combination of the white-box implementation and the hardware implementation.

Next, the split-white-box implementation 120 may incorporate the a secure hardware element 140 implementing a secure function *ƒ*(x)*.* The split white-box implementation 120 may further incorporate a software implementation of the inverse of *ƒ*(x) or *ƒ*⁻¹ 130. The split white-box implementation 120 may operate as follows. The first portion 122 of the white-box implementation 120 receives an input. The first portion 122 performs a first cryptographic operation on the input data to produce an output ω that includes x and y. The value x is input into the secure hardware element 140 which produces a value *ƒ*(x)*.* The software implementation of *ƒ⁻¹*(*x*) 130 receives the value *ƒ*(x) output by the secure hardware element 130 and produces a value x that is then input into the second portion 124 of the cryptographic function. The value of y also passes directly to the second portion 124. The second portion 124 then performs a cryptographic operation on the inputs x and y to produce an output.

In defining the function *ƒ*(x) implemented in the secure hardware element 140, the domain *dom*(*ƒ*) of function *ƒ* may be defined to be large enough in order to prevent an adversary to define it completely by a lookup table with |d*om*(*ƒ*)| rows, where each row defines the outcome for a particular input. The domain *dom*(*ƒ*) may be at least 32 bits, which would require on the order of 1Gbyte of storage. Increasing the number of bits results in larger tables to define the function *ƒ(*x*),* thus making the cryptographic system harder to attack. Accordingly, the number of bits may be chosen to result in a table size needed to tabulate the function *ƒ(*x*)* that is beyond what is practical based upon current technology.

Further, the function *ƒ*(*x*) may be chosen so that the inverse *ƒ*⁻¹ 130 may be easily implemented using white-box techniques. This white-box implementation of inverse *ƒ*⁻¹ 130 may be securely merged with the first portion 222 making it hard for an attacker to extract the value x or to bypass the inverse *ƒ*⁻¹. Further the function *ƒ*(x) may be chosen to enable a low cost hardware implementation. Further, the function *ƒ*(*x*) may be chosen so that it is difficult to invert. This may be beneficial in the following situation. Suppose that company A sells the hardware secure components and that company B provides the white-box implementations. Then, company A may not want to share the details of *ƒ* to company B because company B could in that case clone the secure elements. If the white-box implementation of *ƒ*⁻¹ is difficult to invert, then company A may use this property to provide company B with the white-box implementation of *ƒ*⁻¹, and company B will then not be able to derive *ƒ* from the provided white-box implementation of *ƒ*⁻¹.

An example of such a function will now be described. Chow et al. present a white-box implementation of AES and DES. These white-box implementations may include external encodings as described. An embodiment of *ƒ*(*x*) may be described as follows. Suppose that a software implementation of AES with key *K* is to be bound to a hardware secure element. Then, AES with key *K* may be implemented using by a white-box implementation *WB(AES_{K})* like the one of Chow et al. Next, *ƒ* may be chosen as a reduced-round (*e.g., 5* rounds) AES decryption with a certain key *K_{f}.* To compensate for the reduced black-box security caused by the decreased number of rounds and to ease protection against side-channel attacks, the key size may be increased by making the MixColumn coefficients part of the key. Further, the standard AES substitution box itself may be replaced by one of a number of alternative substitution boxes, to further expand the key size. A table-based white-box implementation of this modified AES algorithm may be derived similarly as for a standard AES algorithm. This white-box implementation may be used to implement the inverse *ƒ*⁻¹ 130. This white-box implementation of the inverse *ƒ*⁻¹ 130 may now easily be integrated with the second portion 124 of the cryptographic operation in such a way that an attacker cannot circumvent the inverse *ƒ*⁻¹ 130. This results in a white-box implementation of a cryptographic function that depends upon a hardware element.

The secure hardware element 140 as described above may be any security anchor whose implementation details are difficult for an attacker to access. The function *ƒ* can, for instance, also be computed by the operating system, a program running in TrustZone, or any other secure computing environment. TrustZone provides a low-cost alternative to adding another dedicated security core to a system on a chip, by providing two virtual processors backed by hardware based access control. This lets the application core switch between two states, referred to as worlds, in order to prevent information from leaking from the more trusted world to the less trusted world. This world switch is generally orthogonal to all other capabilities of the processor, thus each world can operate independently of the other while using the same core. This implementation of *ƒ* may be carried out by a secure hardware element including the processor implementing the cryptographic function or on a separate processor.

Further, the function *ƒ* need not be fixed. It may also be configurable using various input parameters as described above. For instance, specific parameters may be provided via flash memory or other programmable memory. Such configuration capability allows for each function *ƒ* to be uniquely specified for each individual or groups of white-box implementations.

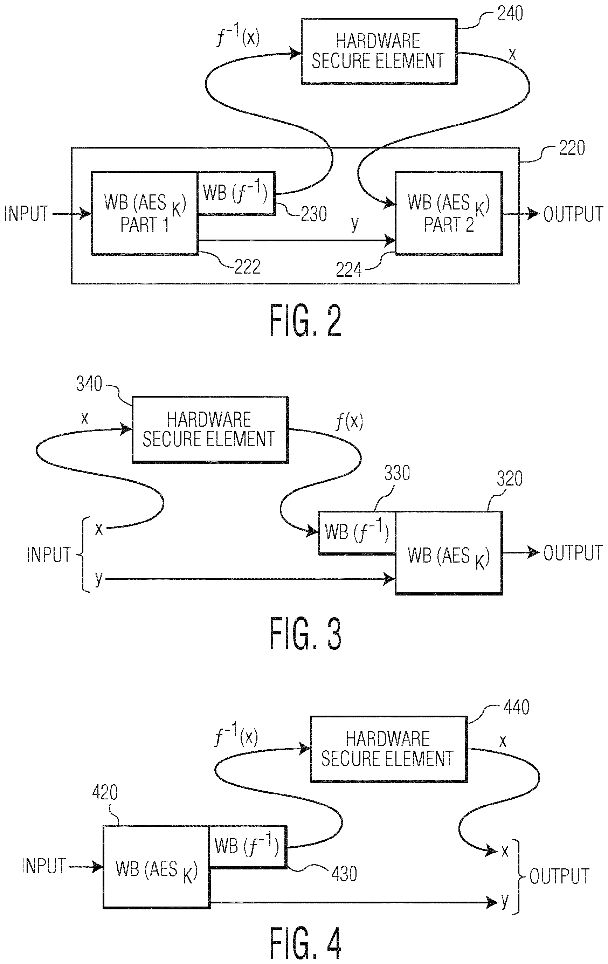

FIG. 2 illustrates a second embodiment of a cryptographic system using both software and a secure hardware element. The second embodiment includes a white-box implementation 220 and a secure hardware element 240. The secure hardware element 240 is similar to the secure hardware element 140 of FIG. 1. The white-box implementation 220 is similar to the white-box implementation 120 in FIG. 1 except that the inverse *ƒ*⁻¹ 230 is integrated with the first portion 222 of the cryptographic operation instead of the second portion 224 of the cryptographic operation. In operation, the first portion 222 produces *ƒ*⁻¹(*x*) and y as the intermediate values. The inverse *ƒ*⁻¹ 230 may be integrated with the first portion 222 and receives x as an input to then produce the value *ƒ*⁻¹(*x*). The intermediate value y is input into the second portion 224 of the cryptographic operation the same as in FIG. 1. The hardware element 240 receives *ƒ*⁻¹(*x*) as an input and produces an output x. The output x is then input into the second portion 224. The second portion 224 then produces an output. The implementation of the first portion 222, second portion 224, inverse *ƒ*⁻¹ 230, and secure hardware element 240 may be the same as those described above.

FIG. 3 illustrates a third embodiment of a cryptographic system using both software and a secure hardware element. The third embodiment includes a white-box implementation 320 and a secure hardware element 340. The secure hardware element 340 is similar to the secure hardware element 140 of FIG. 1. The white-box implementation 320 is similar to the white-box implementation 120 in FIG. 1 except that the white-box implementation is not split. Instead the inverse *ƒ*⁻¹ 330 is integrated at the input of the white-box implementation 320. In operation, the input is split into the x and y portions as described above. The value x is input to the secure hardware element 340 which produces an output *ƒ*(*x*)*.* The output *f*(x) is then input into the inverse *ƒ*⁻¹ 330 that may be integrated with the white-box implementation. Further, the value y is input into the white-box implementation 320. The white-box implementation 320 produces the output.

FIG. 4 illustrates a fourth embodiment of a cryptographic system using both software and a secure hardware element. The fourth embodiment includes a white-box implementation 420 and a secure hardware element 440. The secure hardware element 440 is similar to the secure hardware element 140 of FIG. 1. The white-box implementation 420 is similar to the white-box implementation 120 in FIG. 1 except that that the white-box implementation is not split. Instead the inverse *ƒ*⁻¹ 430 is integrated at the output of the white-box implementation 420. In operation the white-box implementation 420 receives an input. The white-box implementation 420 produces an output that is split into the x and y portions. The value x is input into the inverse *ƒ*⁻¹ 430 that may be integrated with the white-box implementation 420 to produce an output *ƒ*⁻¹(*x*). The output *ƒ*⁻¹(*x*) is then input into the secure hardware element 440 to produce the value x. Further, the white-box implementation 420 produces the value y. The x and y values are the output of the cryptographic function.

While a table lookup implementation of the cryptographic operation is described by Chow, an finite state machine implementation may also be used. Examples of white-box implementations using finite state machines are disclosed in U.S. Patent Publication 2007/0014394 entitled "Data Processing Method" and a presentation at the Re-trust Sixth Quarterly Meeting entitled "Synchrosoft MCFACTTM Secure Data Processing Technology" by Wulf Harder and Atis Straujums dated March 11, 2008.

A method according to the embodiments of the invention may be implemented on a computer as a computer implemented method. Executable code for a method according to the invention may be stored on a computer program medium. Examples of computer program media include memory devices, optical storage devices, integrated circuits, servers, online software, *etc.* Accordingly, a white-box system may include a computer implementing a white-box computer program. Such system, may also include other hardware elements including storage, network interface for transmission of data with external systems as well as among elements of the white-box system.

In an embodiment of the invention, the computer program may include computer program code adapted to perform all the steps of a method according to the invention when the computer program is run on a computer. Preferably, the computer program is embodied on a non-transitory computer readable medium.

Further, because white-box cryptography is often very complicated and/or obfuscated it is tedious for a human to write. It is therefore of advantage to have a method to create the cryptographic system according to the embodiments of the invention in an automated manner.

A method of creating the cryptographic system according to the invention may be implemented on a computer as a computer implemented method, or in dedicated hardware, or in a combination of both. Executable code for a method according to the invention may be stored on a computer program medium. In such a method, the computer program may include computer program code adapted to perform all the steps of the method when the computer program is run on a computer. The computer program is embodied on a non-transitory computer readable medium.

The cryptographic system described herein may be implemented on a user device such as a mobile phone, table, computer, set top box, smart TV, *etc.* A content provider, such as a television network, video stream service, financial institution, music streaming service, *etc.,* may provide software to the user device for receiving encrypted content from the content provider. That software may have the encryption key embedded therein as described above, and may also include binding strings as described above. Then the content provider may send encrypted content to the user device, which may then decrypt using the supplied software and use the content.

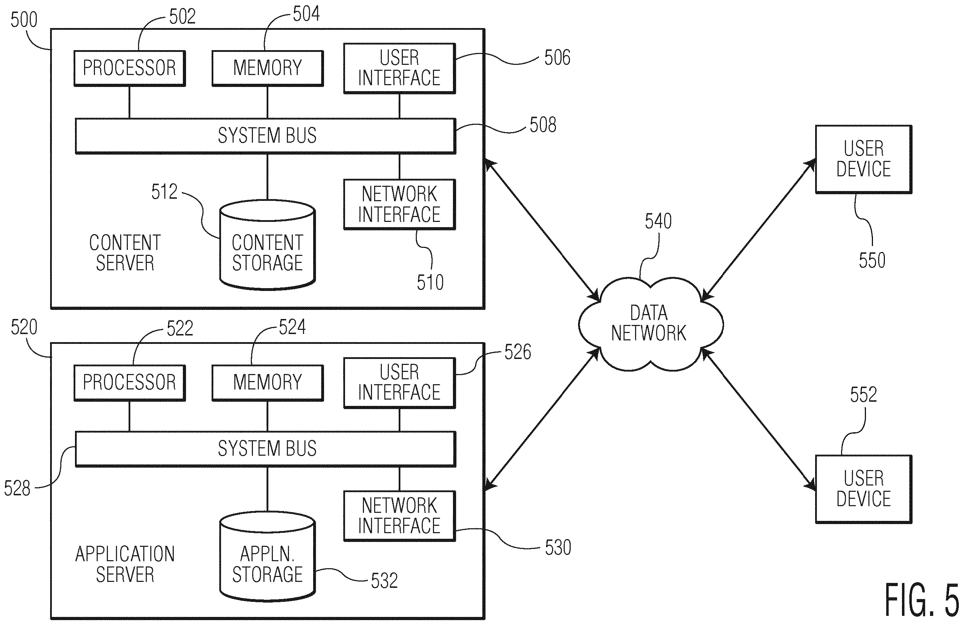

FIG. 5 illustrates a system for providing a user device secure content and a software application that processes the secure content. The system includes a content server 500, application server 520, user devices 550, 552, and a data network 540. The user devices 550, 552 may request access to secure content provided by the content server 500 via data network 540. The data network can be any data network providing connectivity between the user devices 550, 552 and the content server 500 and application server 520. The user devices 550, 552 may be one of a plurality of devices, for example, set top boxes, media streamers, digital video recorders, tablets, mobile phones, laptop computers, portable media devices, smart watches, desktop computers, media servers, *etc.*

The user request for access may first require the downloading of a software application that may be used to process the secure content provided by the content server 500. The software application may be downloaded from the application server 520. The software application may be obscured using the techniques described above as well as operate as described above. Once the user devices 550, 552 install the software application, the user device may then download secure content from the content server 500 and access the secure content using the downloaded software application. For example, the downloaded software application may perform decryption of encrypted content received from the content server. In other embodiments, the software application may perform other secure operations, such as for example, encryption, digital signature generation and verification, *etc.*

The content server 500 may control the access to the secure content provided to the user devices 550, 552. As a result when the content server 500 receives a request for secure content, the content server 500 may transmit the secure content to the requesting user device. Likewise, the application server 520 may control access to the software application provided to the user devices 550, 552. As a result when the content server 520 receives a request for the software application, the application server 520 may transmit the software application to the requesting user device. A user device requesting the software application or secure content may also be authenticated by the respective servers, before providing the software application or secure content to the user device.

The content server 500 may include a processor 502, memory 504, user interface 506, network interface 510, and content storage 512 interconnected via one or more system buses 508. It will be understood that FIG. 3 constitutes, in some respects, an abstraction and that the actual organization of the components of the device 500 may be more complex than illustrated.

The processor 502 may be any hardware device capable of executing instructions stored in memory 504 or storage 512. As such, the processor may include a microprocessor, field programmable gate array (FPGA), application-specific integrated circuit (ASIC), or other similar devices.

The memory 504 may include various memories such as, for example L1, L2, or L3 cache or system memory. As such, the memory 502 may include static random access memory (SRAM), dynamic RAM (DRAM), flash memory, read only memory (ROM), or other similar memory devices.

The user interface 506 may include one or more devices for enabling communication with a user such as an administrator. For example, the user interface 506 may include a display, a mouse, and a keyboard for receiving user commands.

The network interface 510 may include one or more devices for enabling communication with other hardware devices. For example, the network interface 510 may include a network interface card (NIC) configured to communicate according to the Ethernet protocol. Additionally, the network interface 510 may implement a TCP/IP stack for communication according to the TCP/IP protocols. Various alternative or additional hardware or configurations for the network interface 510 will be apparent.

The content storage 512 may include one or more machine-readable content storage media such as read-only memory (ROM), random-access memory (RAM), magnetic disk storage media, optical storage media, flash-memory devices, or similar storage media. In various embodiments, the content storage 512 may store content to be provided to users.

The application server 520 includes elements like those in the content server 500 and the description of the like elements in the content server 500 apply to the application server 520. Also, the content storage 512 is replaced by application storage 532. Further, it is noted that the content server and applications server may be implemented on a single server. Also, such servers may be implemented on distributed computer systems as well as on cloud computer systems.

Any combination of specific software running on a processor to implement the embodiments of the invention, constitute a specific dedicated machine.

As used herein, the term "non-transitory machine-readable storage medium" will be understood to exclude a transitory propagation signal but to include all forms of volatile and non-volatile memory. Further, as used herein, the term "processor" will be understood to encompass a variety of devices such as microprocessors, field-programmable gate arrays (FPGAs), application-specific integrated circuits (ASICs), and other similar processing devices. When software is implemented on the processor, the combination becomes a single specific machine.

It should be appreciated by those skilled in the art that any block diagrams herein represent conceptual views of illustrative circuitry embodying the principles of the invention.

Although the various exemplary embodiments have been described in detail with particular reference to certain exemplary aspects thereof, it should be understood that the invention is capable of other embodiments and its details are capable of modifications in various obvious respects. As is readily apparent to those skilled in the art, variations and modifications can be effected while remaining within the scope of the invention. Accordingly, the foregoing disclosure, description, and figures are for illustrative purposes only and do not in any way limit the invention, which is defined only by the claims.

## Claims

1. A non-transitory machine-readable storage medium encoded with instructions for a keyed cryptographic operation having a first and second portion for execution by a cryptographic system mapping an input message to an output message, comprising:
- instructions for outputting first cryptographic data from a first portion of the cryptographic operation to a secure hardware device implementing a secure function on the first cryptographic data;
- instructions for receiving output data from the secure hardware device;
- instructions for implementing an inverse of the secure function on the output data; and
- instructions for performing a second portion of the cryptographic operation on the inverted output data,
wherein the instructions for implementing the inverse of the secure function on the output data are securely merged with the instructions for performing the second portion of the cryptographic operation on the inverted output data so that the inverted output is not accessible to an attacker.

2. The non-transitory machine-readable storage medium of claim 1, further comprising instructions for outputting second cryptographic data from a first portion of the cryptographic operation to the second portion of the cryptographic operation.

3. The non-transitory machine-readable storage medium of claim 1 or 2, wherein instructions for implementing an inverse of the secure function on the output data and instructions for performing a second portion of the cryptographic operation on the inverted output data include lookup tables.

4. The non-transitory machine-readable storage medium of any preceding claim, wherein instructions for implementing an inverse of the secure function on the output data and instructions for performing a second portion of the cryptographic operation on the inverted output data include state machines.

5. The non-transitory machine-readable storage medium of any preceding claim, wherein input parameters specify the inverse of the secure function.

6. The non-transitory machine-readable storage medium of any preceding claim, wherein the hardware device implementing a secure function is a processor and the secure function is implemented in an operating system on the processor.

7. The non-transitory machine-readable storage medium of any preceding claim, wherein the hardware device implementing a secure function is a processor implementing a TrustZone and the secure function is a program running in the TrustZone.

8. A non-transitory machine-readable storage medium encoded with instructions for a keyed cryptographic operation having a first and second portion for execution by a cryptographic system mapping an input message to an output message, comprising:
- instructions for performing a first portion of the cryptographic operation to produce cryptographic data;
- instructions for implementing an inverse of a secure function on a first portion of the cryptographic data;
- instructions for outputting inverted cryptographic data to a hardware device implementing the secure function on the inverted cryptographic data;
- instructions for receiving output data from the hardware device; and
- instructions for performing a second portion of the cryptographic operation on the hardware device output data,
wherein the instructions for implementing the inverse of the secure function on portions of the cryptographic data are securely merged with the instructions for implementing the inverse of the secure function on the cryptographic data so that the inverted output is not accessible to an attacker.

9. The non-transitory machine-readable storage medium of claim 8, further comprising instructions for outputting second cryptographic data from a first portion the cryptographic operation to the second portion of the cryptographic operation.

10. The non-transitory machine-readable storage medium of claim 8 or 9, wherein instructions for implementing an inverse of a secure function on portions of the cryptographic data and the instructions for implementing an inverse of a secure function on the cryptographic data include lookup tables.

11. The non-transitory machine-readable storage medium of claim 8 or 9, wherein instructions for implementing an inverse of a secure function on a portions of the cryptographic data and the instructions for implementing an inverse of a secure function on the cryptographic data include state machines.

12. The non-transitory machine-readable storage medium of any one of claims 8 to 11, wherein input parameters specify the inverse of the secure function.

13. The non-transitory machine-readable storage medium of any one of claims 8 to 12, wherein the hardware device implementing a secure function is a processor and the secure function is implemented in an operating system on the processor.

14. The non-transitory machine-readable storage medium of any one of claims 8 to 13, wherein the hardware device implementing a secure function is a processor implementing a TrustZone and the secure function is a program running in the TrustZone.

## Patentansprüche

1. Ein nicht transitorisches Maschinen-lesbares Speichermedium, kodiert mit Instruktionen für eine verschlüsselte kryptografische Operation, welche einen ersten Teil und einen zweiten Teil hat zum Ausführen mittels eines kryptografischen Systems, welches eine Eingabenachricht zur einer Ausgabenachricht zuordnet, aufweisend:
- Instruktionen zum Ausgeben erster kryptografischer Daten von einem ersten Teil von der kryptografischen Operation zu einer sicheren Hardwarevorrichtung, welche eine sichere Funktion auf den ersten kryptografischen Daten implementiert;
- Instruktionen zum Empfangen von Ausgabedaten von der sicheren Hardwarevorrichtung;
- Instruktionen zum Implementieren einer Inversen von der sicheren Funktion auf den Ausgabedaten; und
- Instruktionen zum Ausführen eines zweiten Teiles von der kryptografischen Operation auf den invertierten Ausgabedaten,
wobei die Instruktionen zum Implementieren der Inversen von der sicheren Funktion auf den Ausgabedaten sicher verbunden sind mit den Instruktionen zum Ausführen des zweiten Teiles von der kryptografischen Operation auf den invertierten Ausgabedaten, so dass die invertierte Ausgabe nicht zugänglich für einen Angreifer ist.

2. Das nicht transitorische Maschinen-lesbare Speichermedium gemäß Anspruch 1, ferner aufweisend Instruktionen zum Ausgeben zweiter kryptografischer Daten von einem ersten Teil von der kryptografischen Operation zu dem zweiten Teil von der kryptografischen Operation.

3. Das nicht transitorische Maschinen-lesbare Speichermedium gemäß Anspruch 1 oder 2, wobei Instruktionen zum Implementieren einer Inversen von der sicheren Funktion auf den Ausgabedaten und Instruktionen zum Ausführen eines zweiten Teiles von der kryptografischen Operation auf den invertierten Ausgabedaten Nachschlagetabellen umfassen.

4. Das nicht transitorische Maschinen-lesbare Speichermedium gemäß einem vorhergehenden Anspruch, wobei Instruktionen zum Implementieren einer Inversen von der sicheren Funktion auf den Ausgabedaten und Instruktionen zum Ausführen eines zweiten Teiles von der kryptografischen Operation auf den invertierten Ausgabedaten Zustandsautomaten umfassen.

5. Das nicht transitorische Maschinen-lesbare Speichermedium gemäß einem vorhergehenden Anspruch, wobei Eingabeparameter die Inverse von der sicheren Funktion spezifizieren.

6. Das nicht transitorische Maschinen-lesbare Speichermedium gemäß einem vorhergehenden Anspruch, wobei die Hardwarevorrichtung, welche eine sichere Funktion implementiert, ein Prozessor ist und die sichere Funktion in einem Betriebssystem auf dem Prozessor implementiert ist.

7. Das nicht transitorische Maschinen-lesbare Speichermedium gemäß einem vorhergehenden Anspruch, wobei die Hardwarevorrichtung, welche eine sichere Funktion implementiert, ein Prozessor ist, welcher eine TrustZone implementiert und die sichere Funktion ein Programm ist, welches in der TrustZone läuft.

8. Ein nicht transitorische Maschinen-lesbare Speichermedium kodiert mit Instruktionen für eine verschlüsselte kryptografische Operation, welche einen ersten Teil und einen zweiten Teil hat zum Ausführen mittels eines kryptografischen Systems, welches eine Eingabenachricht zur einer Ausgabenachricht zuordnet, aufweisend:
- Instruktionen zum Ausführen eines ersten Teiles von der kryptografischen Operation, um kryptografische Daten zu erzeugen;
- Instruktionen zum Implementieren einer Inversen von einer sicheren Funktion auf einem ersten Teil von den kryptografischen Daten;
- Instruktionen zum Ausgeben invertierter kryptografischer Daten zu einer Hardwarevorrichtung, welche die sichere Funktion auf den invertierten kryptografischen Daten implementiert;
- Instruktionen zum Empfangen von Ausgabedaten von der Hardwarevorrichtung; und
- Instruktionen zum Ausführen eines zweiten Teiles von der kryptografischen Operation auf den Hardwarevorrichtung Ausgabedaten,
wobei die Instruktionen zum Implementieren der Inversen von der sicheren Funktion auf Teilen von den kryptografischen Daten sicher verbunden sind mit den Instruktionen zum Implementieren der Inversen auf der sicheren Funktion auf den kryptografischen Daten, so dass die invertierte Ausgabe nicht zugänglich für einen Angreifer ist.

9. Das nicht transitorische Maschinen-lesbare Speichermedium gemäß Anspruch 8, ferner aufweisend Instruktionen zum Ausgeben zweiter kryptografischer Daten von einem ersten Teil der kryptografischen Operation zu dem zweiten Teil von der kryptografischen Operation.

10. Das nicht transitorische Maschinen-lesbare Speichermedium gemäß Anspruch 8 oder 9, wobei Instruktionen zum Implementieren einer Inversen von einer sicheren Funktion auf Teilen von den kryptografischen Daten und die Instruktionen zum Implementieren einer Inversen von einer sicheren Funktion auf den kryptografischen Daten Nachschlagetabellen umfassen.

11. Das nicht transitorische Maschinen-lesbare Speichermedium gemäß Anspruch 8 oder 9, wobei Instruktionen zum Implementieren einer Inversen von einer sicheren Funktion auf Teilen von den kryptografischen Daten und die Instruktionen zum Implementieren einer Inversen von einer sicheren Funktion auf den kryptografischen Daten Zustandsautomaten umfassen.

12. Das nicht transitorische Maschinen-lesbare Speichermedium gemäß einem der Ansprüche 8 bis 11, wobei Eingabeparameter die Inverse von der sicheren Funktion spezifizieren.

13. Das nicht transitorische Maschinen-lesbare Speichermedium gemäß einem der Ansprüche 8 bis 12, wobei die Hardwarevorrichtung, welche eine sicheren Funktion implementiert, ein Prozessor ist und die sichere Funktion in einem Betriebssystem auf dem Prozessor implementiert ist.

14. Das nicht transitorische Maschinen-lesbare Speichermedium gemäß einem der Ansprüche 8 bis 13, wobei die Hardwarevorrichtung, welche eine sichere Funktion implementiert, ein Prozessor ist, welcher eine TrustZone implementiert und die sichere Funktion ein Programm ist, welches in der TrustZone läuft.

## Revendications

1. Support de stockage non transitoire lisible par machine sur lequel sont codées des instructions destinées à effectuer une opération cryptographique à clé ayant des première et seconde parties destinées à une exécution par un système cryptographique mettant en correspondance un message d'entrée avec un message de sortie, comprenant :
- des instructions destinées à fournir en sortie des premières données cryptographiques à partir d'une première partie de l'opération cryptographique à un dispositif matériel sécurisé mettant en oeuvre une fonction sécurisée sur les premières données cryptographiques ;
- des instructions destinées à recevoir des données de sortie du dispositif matériel sécurisé ;
- des instructions destinées à mettre en oeuvre un inverse de la fonction sécurisée sur les données de sortie ; et
- des instructions destinées à mettre en oeuvre une seconde partie de l'opération cryptographique sur les données de sortie inversées,
dans lequel les instructions destinées à mettre en oeuvre l'inverse de la fonction sécurisée sur les données de sortie sont fusionnées de manière sécurisée avec les instructions destinées à mettre en oeuvre la seconde partie de l'opération cryptographique sur les données de sortie inversées de manière à ce que la sortie inversée ne soit pas accessible à un attaquant.

2. Support de stockage non transitoire lisible par machine selon la revendication 1, comprenant en outre des instructions destinées à fournir en sortie des secondes données cryptographiques d'une première partie de l'opération cryptographique à la seconde partie de l'opération cryptographique.

3. Support de stockage non transitoire lisible par machine selon la revendication 1 ou 2, dans lequel des instructions destinées à mettre en oeuvre un inverse de la fonction sécurisée sur les données de sortie et des instructions destinées à mettre en oeuvre une seconde partie de l'opération cryptographique sur les données de sortie inversées comprennent des tables de consultation.

4. Support de stockage non transitoire visible par machine selon l'une quelconque des revendications précédentes, dans lequel des instructions destinées à mettre en oeuvre un inverse de la fonction sécurisée sur les données de sortie et des instructions destinées à mettre en oeuvre une seconde partie de l'opération cryptographique sur les données de sortie inversées comprennent des automates finis.

5. Support de stockage non transitoire lisible par machine selon l'une quelconque des revendications précédentes, dans lequel des paramètres d'entrée spécifient l'inverse de la fonction sécurisée.

6. Support de stockage non transitoire lisible par machine selon l'une quelconque des revendications précédentes, dans lequel le dispositif matériel mettant en oeuvre une fonction sécurisée est un processeur et la fonction sécurisée est mise en oeuvre dans un système d'exploitation sur le processeur.

7. Support de stockage non transitoire lisible par machine selon l'une quelconque des revendications précédentes, dans lequel le dispositif matériel mettant en oeuvre une fonction sécurisée est un processeur mettant en oeuvre une zone de confiance (TrustZone) et la fonction sécurisée est un programme s'exécutant dans la TrustZone.

8. Support de stockage non transitoire lisible par machine sur lequel sont stockées des instructions destinées à effectuer une opération cryptographique à clé ayant des première et seconde parties destinées à une exécution par un système cryptographique mettant en correspondance un message d'entrée avec un message de sortie, comprenant :
- des instructions destinées à mettre en oeuvre une première partie de l'opération cryptographique afin de produire des données cryptographiques ;
- des instructions destinées à mettre en oeuvre un inverse d'une fonction sécurisée sur une première partie des données cryptographiques ;
- des instructions destinées à fournir en sortie des données cryptographiques inversées à un dispositif matériel mettant en oeuvre la fonction sécurisée sur les données cryptographiques inversées ;
- des instructions destinées à recevoir des données de sortie du dispositif matériel ; et
- des instructions destinées à mettre en oeuvre une seconde partie de l'opération cryptographique sur les données de sortie du dispositif matériel,
dans lequel les instructions destinées à mettre en oeuvre l'inverse de la fonction sécurisée sur des parties des données cryptographiques sont fusionnées de manière sécurisée avec les instructions destinées à mettre en oeuvre l'inverse de la fonction sécurisée sur les données cryptographiques de manière à ce que la sortie inversée ne soit pas accessible à un attaquant.

9. Support de stockage non transitoire lisible par machine selon la revendication 8, comprenant en outre des instructions destinées à fournir en sortie des secondes données cryptographiques d'une première partie de l'opération cryptographique à la seconde partie de l'opération cryptographique.

10. Support de stockage non transitoire lisible par machine selon la revendication 8 ou 9, dans lequel des instructions destinées à mettre en oeuvre un inverse d'une fonction sécurisée sur des parties des données cryptographiques et les instructions destinées à mettre en oeuvre un inverse d'une fonction sécurisée sur les données cryptographiques comprennent des tables de consultation.

11. Support de stockage non transitoire lisible par machine selon la revendication 8 ou 9, dans lequel des instructions destinées à mettre en oeuvre un inverse d'une fonction sécurisée sur une partie des données cryptographiques et les instructions destinées à mettre en oeuvre un inverse d'une fonction sécurisée sur les données cryptographiques comprennent des automates finis.

12. Support de stockage non transitoire lisible par machine selon l'une quelconque des revendications 8 à 11, dans lequel des paramètres d'entrée spécifient l'inverse de la fonction sécurisée.

13. Support de stockage non transitoire lisible par machine selon l'une quelconque des revendications 8 à 12, dans lequel le dispositif matériel mettant en oeuvre une fonction sécurisée est un processeur et la fonction sécurisée est mise en oeuvre dans un système d'exploitation sur le processeur.

14. Support de stockage non transitoire lisible par machine selon l'une quelconque des revendications 8 à 13, dans lequel le dispositif matériel mettant en oeuvre une fonction sécurisée est un processeur mettant en oeuvre une zone de confiance (TrustZone) et la fonction sécurisée est un programme s'exécutant dans la TrustZone.
